# EUROPEAN PATENT SPECIFICATION

(11) **EP 2 447 695 B1**
(45) Date of publication and mention of the grant of the patent: **15.11.2017**
(21) Application number: 10791866.6
(22) Date of filing: 23.06.2010
(51) Int. Cl.: G01M 7/08, G01M 17/007

(54) **COLLISION TEST DEVICE**
KOLLISIONSTESTVORRICHTUNG
APPAREIL POUR ESSAI DE COLLISION

(30) Priority: 26.06.2009 JP 2009152356
(43) Date of publication of application: 02.05.2012
(73) Proprietor: UD Trucks Corporation, Saitama 362-8523 (JP)
(72) Inventor: KURIYAMA, Yoshitsugu, Ageo-shi Saitama 362-8523 (JP); KUROKAWA, Isamu, Ageo-shi Saitama 362-8523 (JP)
(74) Representative: Zeitler Volpert Kandlbinder Patent- und Rechtsanwälte Partnerschaft mbB
(86) International application number: PCT/JP2010/004187
(87) International publication number: WO 2010/150544

(56) References cited:
- EP-A1- 1 657 538
- JP-A- 2 006 723
- JP-A- 5 209 806
- JP-A- 2001 018 811
- JP-A- 2006 023 118
- JP-A- 2006 023 118
- JP-B2- 3 207 507

## Description

### TECHNICAL FIELD

The present invention relates to a crash test apparatus conducting a crash test of a cab of a truck.

### BACKGROUND ART

As presented in Patent Document 1 or FIG 12, a conventional crash test of a truck 1 is conducted by crashing a front surface of the truck 1 to a crash barrier 9 in a finished real car state including a cab 3, a frame 5, and a load-carrying platform 7. Other documents, such as JP3207507 or EP1657538, describe collision test devices comprising a cart for mounting a vehicle cab wherein the cart is moved to collide with a barrier.

### PRIOR ART DOCUMENT

### PATENT DOCUMENT

Patent Document 1: Japanese Unexamined Patent Application Publication No. H05-209806

### DISCLOSURE OF THE INVENTION

### PROBLEMS TO BE SOLVED BY THE INVENTION

In the crash test of a truck, the confirmation of cab strength, the verification and confirmation of airbag sensor sensitivity, the confirmation of a crew damage value, and the like are necessary, but crash speed differs depending on each item to be confirmed.

Accordingly, each crash test needs a vehicle, which has given rise to problems such as an increase in development expense and the elongation of an evaluation period.

However, from the observation of phenomena in a real vehicle crash test of a cab-over truck with a frame, it has been known that the frame and the cab exhibit independent behaviors, and in the development of an airbag, the verification and confirmation of the airbag sensor sensitivity, and the confirmation of the crew damage value, the development is possible if the independent behavior of the cab is known.

Therefore, by establishing a bench test method for only a cab not using a real vehicle, it is possible to evaluate a vehicle body deformation amount and transmission of acceleration transmitted to a vehicle body which were not conventionally possible to evaluate, and further the evaluation of displacement amounts of a steering wheel and a steering column, and so on are also possible, which makes it possible to reduce development expense owing to a reduction in the number of crashed real vehicles and shorten a development evaluation period.

The present invention was devised in consideration of such circumstances, and has a proposition to provide a crash test apparatus for truck cabs establishing a bench test method for only a cab without using a real vehicle.

### MEANS FOR SOLVING THE PROBLEMS

To attain the above proposition, a crash test apparatus according to claim 1 includes a fixture frame mounting a cab, a cart mounting the fixture frame, a protruding barrier disposed in front of the cab, and a crash device moving the cart to make the cab crash against the protruding barrier.

Further, an invention according to claim 2 includes, in the crash test apparatus according to claim 1, a buffer device disposed between a front of the cart and the protruding barrier, and when the crash device operates, deforming by a deformation amount of a frame of a vehicle on which the cab is mounted, to make the cab crash against the protruding barrier.

Further, an invention according to claim 3 in which, in the crash test apparatus according to claim 1, the fixture frame includes a front support device supporting a front part of the cab so as to allow the front part to move in a front and rear direction and a rear support device fixing a rear part of the cab to the fixture frame to support the rear part. An invention according to claim 4 in which, in the crash test apparatus according to claim 3, a load-carrying platform jig is fixed at a position behind the cab on the fixture frame.

Further, an invention according to claim 5 in which, in the crash test apparatus according to claim 3, the front part of the cab being supported by the front support device is a front cab mounting part disposed on a front lower part of the cab, a gear box jig imitating a steering gear box is attached to the front cab mounting part, and a steering column is attached to the gear box jig. An invention according to claim 6 in which, in the crash test apparatus according to claim 3, the front part of the cab being supported by the front support device is a front cab mounting part disposed on a front lower part of the cab, a steering column mounting bracket is attached to the front cab mounting part, and a steering column is attached to the steering column mounting bracket.

### EFFECTS OF THE INVENTION

According to the crash test apparatus according to claim 1, it is possible to evaluate generated acceleration, cab deformation, and the like only with the cab without conducting a crash test using a real vehicle, and the confirmation of cab strength, the verification and confirmation of airbag sensor sensitivity, and the confirmation of a crew damage value are possible, which as a result enables the easy and sure evaluation of the cab, and consequently, it is possible to reduce development expense of new-model vehicles owing to a reduction in the number of crashed real vehicles, shorten an evaluation period, and improve business efficiency.

Further, according to the invention according to claim 2, since the buffer device reproduces the deformation amount of the frame of the real vehicle, there is an advantage that a crash similar to that of the real vehicle can be reproduced.

Further, according to the invention according to claim 3, when the cab crashes against the protruding barrier, the cab deforms while the front support device supporting the front part of the cab is moving backward, which makes it possible to reproduce a crash similar to that of the real vehicle.

Furthermore, according to the invention according to claim 4, when the cab crashes against the protruding barrier, the cab moves backward to crash against the load-carrying platform jig, which makes it possible to reproduce a crash damage that the cab receives from the load-carrying platform.

Further, according to the inventions according to claim 5 and claim 6, it is possible to simulate behaviors of a steering wheel and a steering shaft (steering column) at the time of a crash, and to measure a damage value of a driver.

### BRIEF DESCRIPTION OF THE DRAWINGS

FIG 1 is a side view of a crash test apparatus according to an embodiment of claim 1 to claim 4.
FIG. 2 is a front view of a fixture frame.
FIG 3 is a perspective view of an attachment and a cab mounting part used to explain a slide mechanism of the attachment.
FIG. 4 is a side view of a buffer structure.
FIG 5 is a plane view of the buffer structure.
FIG 6 is an explanatory view illustrating a state where a cab with a different size is mounted on the crash test apparatus in FIG 1.
FIG 7 is a side view of a crash test apparatus according to an embodiment of claim 1 to claim 5.
FIG 8 is a front view of a fixture frame.
FIG 9 is an entire perspective view of a gear box jig.
FIG 10 is a front view of a fixture frame of a crash test apparatus according to an embodiment of claim 1 to claim 4 and claim 6.
FIG 11 is a side view of a steering column mounting bracket.

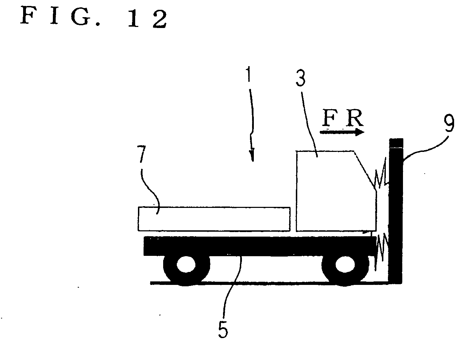

FIG. 12 is an explanatory view illustrating a conventional crash test method.

### BEST MODE FOR CARRYING OUT THE INVENTION

Hereinafter, embodiments of the present invention will be described in detail based on the drawings.

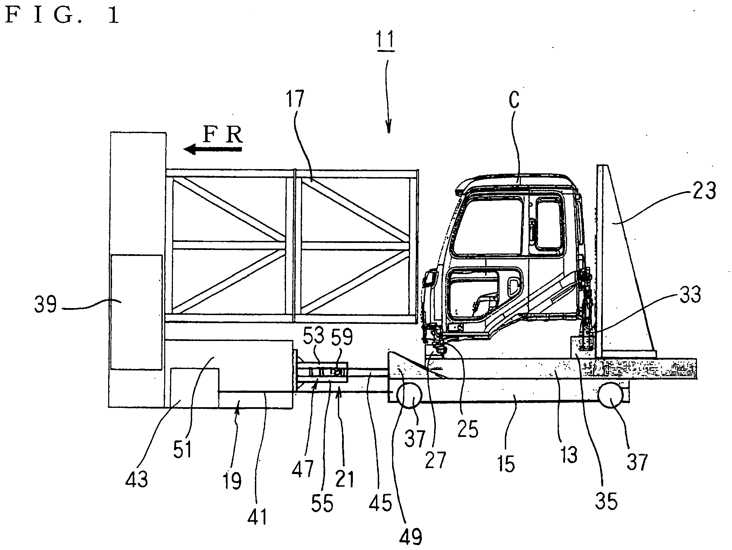

FIG 1 illustrates a crash test apparatus according to an embodiment of claim 1 to claim 4, and the crash test apparatus 11 has a fixture frame 13, a cart 15, a protruding barrier 17, a crash structure 19, a buffer structure 21, and a load-carrying platform jig 23.

The fixture frame 13 is to mount a cab C of a truck to be tested thereon, and as illustrated in FIG 1 to FIG 3, on the left and right of a front upper part of the fixture frame 13, attachments (front support parts: cab mounting part bearings) 27 supporting front cab mounting parts (hereinafter, referred to as "cab mounting parts") 25 disposed on left and right front lower parts of the cab C are disposed so as to be movable in a front and rear direction of the fixture frame 13.

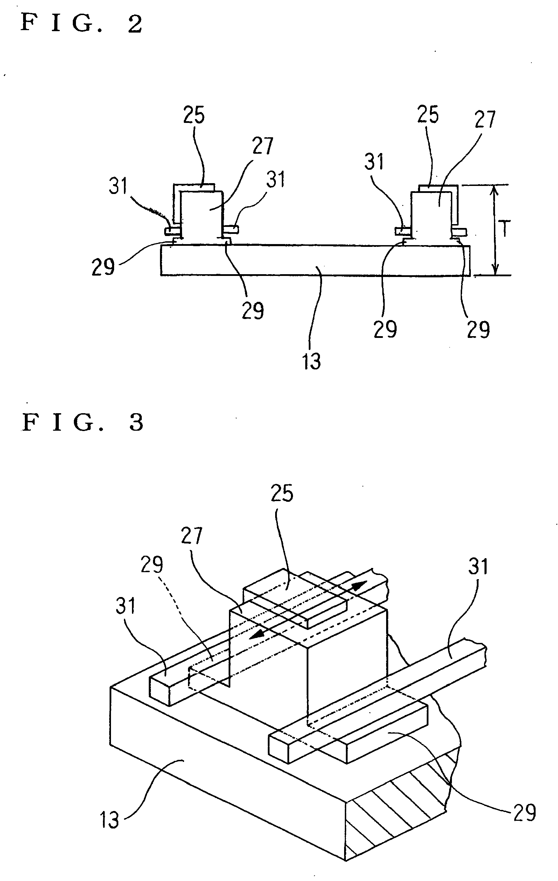

As illustrated in FIG 2 and FIG 3, the attachments 27 each are a block body having an inverted T-shaped cross section, with its laterally projecting flanges 29 being projectingly provided on its left and right lower parts, and the attachments 27 are disposed on the left and right on the fixture frame 13 so that the flanges 29 project in a left and right direction of the fixture frame 13.

On the fixture frame 13, squared timbers 31 pressing the left and right flanges 29 of each of the attachments 27 from above are provided, two for each of the attachment 27, so as to extend in the front and rear direction of the fixture frame 13. This structure enables the attachments 27 to move in the front and rear direction of the fixture frame 13 without floating up from the fixture frame 13. An up and down direction width of the fixture frame 13 and the attachment 27 (T in FIG 2) is equal to an up and down direction width a frame of a real car.

On the left and right of a rear upper part of the fixture frame 13, attachments (rear support parts: rear cab mounting part bearings) 35 being block bodies with a rectangular cross section supporting rear cab mounting parts 33 disposed on a rear lower part of the cab C are fixed.

The fixture frame 13 is firmly fixed on the cart 15, and wheels 37 for moving the cart 15 in the front and rear direction are attached to the cart 15.

As illustrated in FIG 1, the protruding barrier 17 is formed in a rectangular parallelepiped shape, and has a substantially equal width to a width of the cab C. The protruding barrier 17 is disposed in front of the cab C, and its front part is fixed to an existing barrier 39. Further, a lower end of the protruding barrier 17 is set so as to be higher than the attachments 25.

The crash structure 19 moves the cart 15 to make the cab C crash against the protruding barrier 17, and includes a wire 41 whose one end is fixed to the cart 13 and a driving device 43 such as a motor or an engine towing the wire 41 forward.

The buffer structure 21 is provided between a front part of the cart 14 and the existing barrier 39. This buffer structure 21 reproduces a frame deformation amount of a real vehicle, and is composed of a press device 45 and a support structure 47, and the press device 45 is one stay and is fixed to a bracket 49 attached to a front end of the cart 15 to be directed forward.

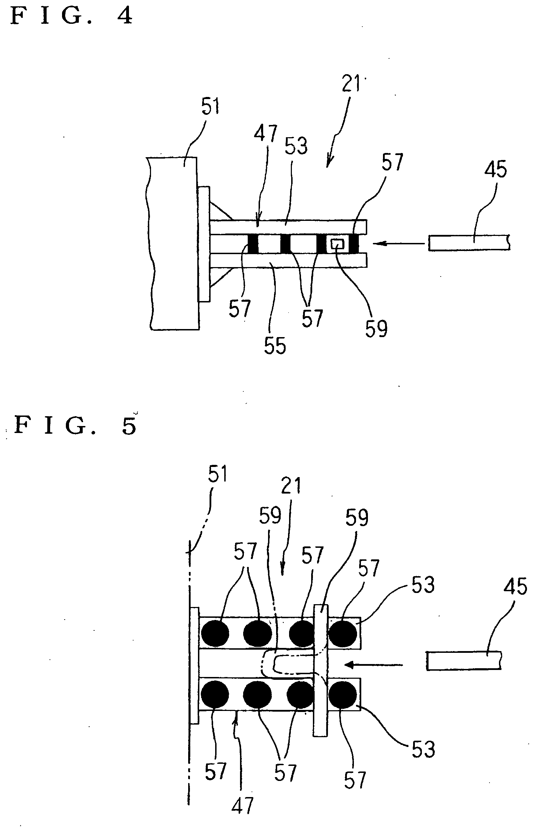

The support structure 47 is mounted on a base table 51 fixed to the existing barrier 39, and as illustrated in FIG 4 and FIG 5, it includes pairs of left and right support devices 53, 55 disposed apart from each other in the up and down direction and a plurality of rollers 57 disposed between the both support devices 53, 55 at predetermined intervals to extend in the up and down direction. As illustrated in the drawings, a steel 59 is inserted and disposed between the left and right rollers 57 sandwiched between the upper and lower support devices 53, 55, and when the crash structure 19 operates, the press device 45 crashes against the steel 59, so that the steel 59 inserted between the left and right rollers 57 deforms as illustrated by the two-dot chain line and the cab C crashes against the protruding barrier 17.

In the deformation of the steel 59, a deformation amount of the steel 59 is a substitute for a frame deformation amount obtained in a real vehicle test, and a cross-sectional dimension of the steel 59, the number thereof, a position where to insert and dispose the steel 59 between the left and right rollers 57, and so on are decided based on a basic deformation amount map calculated from a crash speed. Then, as previously described, the cab C crashes against the protruding barrier 17 and the attachments 27 slide backward at the same time with the deformation of the steel 59, so that a crash similar to that of a real vehicle can be reproduced.

On the fixture frame 13, the load-carrying platform jig 23 is fixed at a position behind the cab C. The position of the load-carrying platform jig 23 is changeable to the same position as that of a load-carrying platform of a vehicle on which the cab C is mounted, and the load-carrying platform jig 23 has a shape corresponding to that of the load-carrying platform of the vehicle on which the cab C is mounted.

Since the crash test apparatus 11 according to this embodiment is thus structured, the cab C is mounted on the fixture frame 13, the cab mounting parts 25 of the cab C are supported on the front attachments 27, and the rear cab mounting parts 33 of the cab C are supported on the rear attachments 35, whereby the cab C is installed on the fixture frame 13.

Then, when, from this state, the crash structure 19 is operated to tow the cart 15 forward, the press device 45 of the buffer structure 21 crashes against the steel 59, and the steel 59 deforms by an amount corresponding to the deformation amount of the frame of the real vehicle, as illustrated in FIG 5, so that the cab C crashes against the protruding barrier 17.

When the cab C thus crashes against the protruding barrier 17, the cab C deforms while the front attachments 27 supporting the front part of the cab C are moving backward, and the rear side of the cab C crashes against the load-carrying platform jig 23.

As described above, the crash test apparatus 11 according to this embodiment can reproduce a crash similar to that of a real vehicle in such a manner that, in the state where the cab C is mounted on the fixture frame 13, the crash structure 19 is operated to make the cab C crash against the protruding barrier 17, and can also reproduce a crash damage that the cab C receives from the load-carrying platform since the rear side of the cab C crashes against the load-carrying platform jig 23 when the cab C crashes against the protruding barrier 17.

Therefore, according to this embodiment, it is possible to evaluate generated acceleration, cab deformation, and so on only with the cab C without conducting a crash test using a real vehicle, and also the confirmation of cab strength, the verification and confirmation of airbag sensor sensitivity, and the confirmation of the crew damage value are possible, which as a result enables the easy and sure evaluation of the cab C, and accordingly it is possible to reduce development expense of new-model vehicles owing to a reduction in the number of crashed real vehicles, shorten the evaluation period, and improve business efficiency.

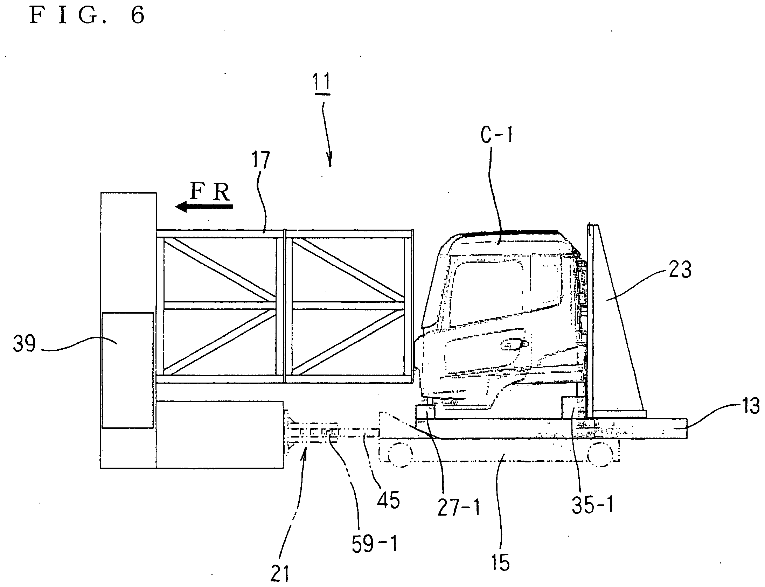

FIG 6 illustrates a state where a cab C-1 with a different size is mounted on the crash test apparatus 11. In FIG 6, the medium-sized cab C is mounted on the crash test apparatus 11, and in FIG. 3, the large-sized cab C-1 is mounted on the crash test apparatus 11. In this case, it is possible to cope with cabs with various sizes by changing the attachments 27, 35 to use attachments 27-1, 35-1 compatible with the cab C-1. Further, when a frame of a vehicle on which the cab is mounted is different, a steel 59-1 compatible with this frame is used.

Incidentally, in the above-described embodiment, the attachments 27 are movable in the front and rear direction but may be fixed to the fixture frame 13.

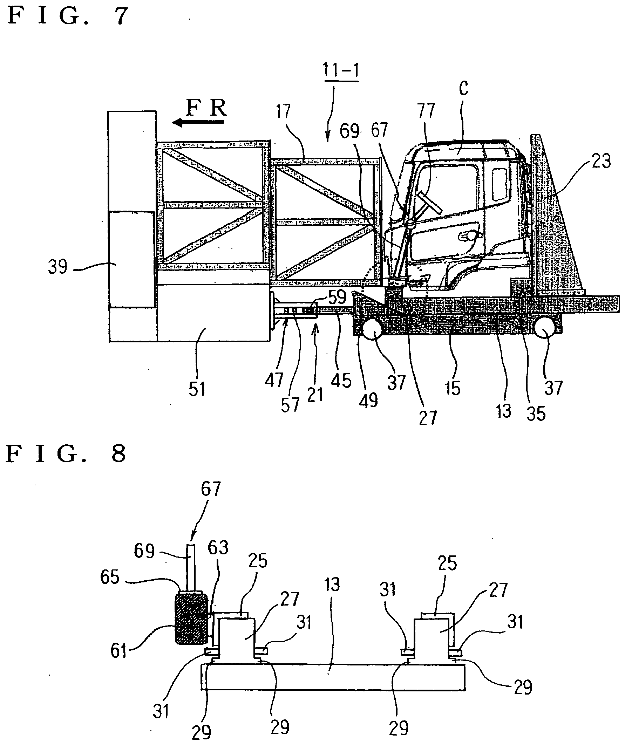

FIG 7 to FIG. 9 illustrate a crash test apparatus according to an embodiment of claim 1 to claim 5, and in addition to the structure of the above-described crash test apparatus 11, the crash test apparatus of this embodiment is capable of reproducing a movement amount (displacement amount) of a steering column (a generic name of all of the steering wheel to the steering shaft) in a real vehicle crash test, and in the drawings, 61 denotes a gear box jig formed in a cylindrical shape imitating an outer shape of an actual gear box, and similarly to a gear box attached to a cab mounting part on a right front part of a cab of a real vehicle, the gear box jig 61 is fixed via a mounting bracket 63 to a cab mounting part 25 disposed on a right part of a fixture frame 13, as illustrated in FIG 8.

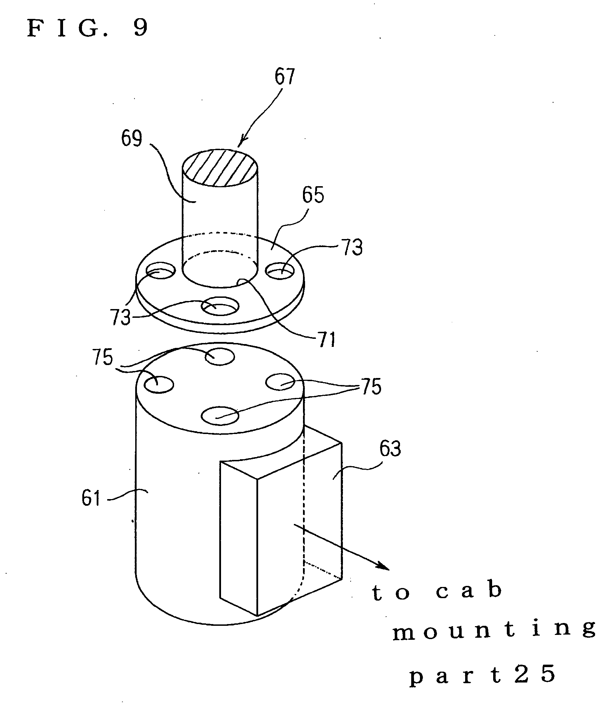

As illustrated in FIG 9, on an upper part of the gear box jig 61, a steering shaft 69 of a steering column 67 is attached via a steering column mounting bracket 65. In the steering column mounting bracket 65, a shaft mounting hole 71 is formed at its center to have an insertion-side tip of the steering shaft 69 inserted therein, and around the shaft mounting hole 71, four bolt insertion holes 73 are formed at 90° intervals.

In the upper part of the gear box jig 61, four bolt mounting screw holes 75 corresponding to the bolt insertion holes 73 are provided, and by using these bolt insertion holes 73 and bolt mounting screw holes 75, the steering column mounting bracket 65 to whose shaft mounting hole 71 the steering shaft 69 is fitted is fixed to the upper part of the gear box jig 61 by screws, whereby the steering column 67 is fixed to the cab mounting part 25 as in a real vehicle.

A protruding barrier 17 is disposed at a lower position than that in the crash test apparatus 11 so that the protruding barrier 17 crashes against the gear box jig 61 at the time of a crash test, as illustrated in FIG 7.

Incidentally, the crash test apparatus 11-1 according to this embodiment also has the crash structure 19, though not shown. Besides, in FIG 7, 77 denotes a steering wheel, and as already described, the steering wheel 77 and the steering shaft 69 form the steering column 67.

Since the other structure is the same as that in the embodiment in FIG 1, the same components will be denoted by the same reference numerals and symbols and a detailed description thereof will be omitted.

The crash test apparatus 11-1 according to this embodiment is thus structured, and the gear box jig 61 imitating an actual gear box is fixed to the cab mounting part 25 as in a real vehicle and the steering column 67 is attached to the gear box jig 61 as in a real vehicle, and therefore, according to this crash test apparatus 11-1 capable of reproducing a crash similar to that of a real vehicle, when the protruding barrier 17 crashes against the gear box jig 61 and the gear box jig 61 deforms, it is possible to simulate behaviors of the steering wheel 77 and the steering shaft 69 (steering column 67) at the time of the crash and to measure a damage value of a driver.

Therefore, according to this embodiment, similarly to the aforesaid embodiment, it is possible to attain the desired proposition, and not only the confirmation of cab strength, the verification and confirmation of the airbag sensor sensitivity, and so on but also the confirmation of a displacement amount of the steering column 67 is possible only with the cab C without conducting a crash test using a real vehicle, so that it is possible to reduce development expense of new-model vehicles owing to a reduction in the number of crashed real vehicles, shorten an evaluation period, and improve business efficiency.

When only the deformation amount of the steering column 67 is verified, the load-carrying platform jig 23 is not necessary, and when all of them including the deformation amount of the cab C and so on are evaluation targets as in the embodiment in FIG 7, the crash test is conducted in a state where the load-carrying platform jig 23 is mounted.

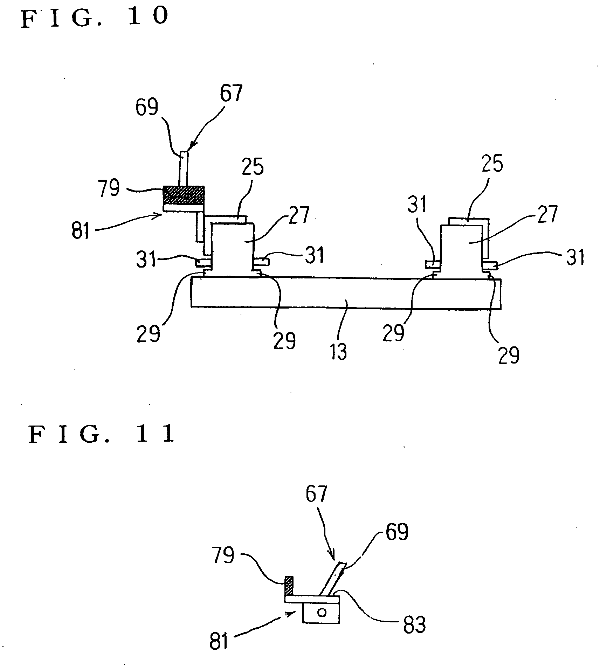

FIG. 10 and FIG 11 illustrate an embodiment of a crash test apparatus according to claim 1 to claim 4 and claim 6, and in this embodiment, instead of the gear box jig 61 and the mounting bracket 63, a steering column mounting bracket 81 with an L-shaped cross section on which a barrier bearing surface 79 facing the protruding barrier 17 is directly fixed to a cab mounting part 25, and a steering shaft 69 is mounted on a steering column mounting surface 83 of the steering column mounting bracket 81.

Since the other structure is the same as that of the embodiment in FIG. 1, the same components will be denoted by the same reference numerals and symbols and a description thereof will be omitted.

This embodiment is thus structured, and according to this embodiment, similarly to the aforesaid embodiments, it is also possible to attain the desired proposition, and when the steering column mounting bracket 81 deforms when the protruding barrier 17 crashes against the barrier bearing surface 79, it is possible to simulate behaviors of a steering wheel 77 and the steering shaft 69 (steering column 67) at the time of the crash and to measure a damage value of a driver.

### EXPLANATION OF REFERENCES

- 11, 11-1: crash test apparatus
- 13: fixture frame
- 15: cart
- 17: protruding barrier
- 19: crash structure
- 21: buffer structure
- 23: load-carrying platform jig
- 25, 33: cab mounting part
- 27, 27-1, 35, 35-1: attachment
- 29: flange
- 31: squared timber
- 37: wheel
- 39: existing barrier
- 41: wire
- 43: driving device
- 45: press device
- 47: support structure
- 53, 55: support device
- 57: roller
- 59, 59-1: steel
- 61: gear box jig
- 63: mounting bracket
- 65, 81: steering column mounting bracket
- 67: steering column
- 69: steering shaft
- 71: shaft mounting hole
- 77: steering wheel
- 79: barrier bearing surface
- 83: steering column mounting surface

## Claims

1. A crash test apparatus (11) comprising:
a fixture frame (13) holding a cab (C, C-1) mounted on a real vehicle frame;
a cart (15) mounting the fixture frame (13);
a protruding barrier (17) disposed in front of the cab (C, C-1);
a moving device (19) moving the cart (15) toward the protruding barrier (17),
a front support device (27, 27-1) being disposed on the fixture frame (13) and supporting a front part of the cab (C, C-1); and
a rear support device (35, 35-1) being disposed on the fixture frame (13) and fixing to support a rear part of the cab (C, C-1); **characterized by**:
the front support device (27, 27-1) being adapted to allow the front part to move in a front and a rear direction; and
a frame deformation amount reproduction mechanism (21) reproducing a deformation of the real vehicle frame when the cab (C, C-1) crashes against the protruding barrier (17) by a movement of the cart (15).

2. The crash test apparatus (11) according to claim 1, wherein
a load-carrying platform jig (23) is mounted behind the cab (C, C-1) on the fixture frame (13).

3. The crash test apparatus (11) according to claim 1, wherein:
the front part of the cab (C, C-1) being supported by the front support device (27, 27-1) is a front cab mounting part (25) disposed on a front lower part of the cab (C, C-1);
a gear box jig (61) imitating a steering gear box is attached to the front cab mounting part (25); and
a steering column (67) is attached to the gear box jig (61).

4. The crash test apparatus (11) according to claim 1, wherein:
the front part of the cab (C, C-1) being supported by the front support device (27, 27-1) is a front cab mounting part (25) disposed on a front lower part of the cab (C, C-1);
a steering column mounting bracket (81) is attached to the front cab mounting part (25); and
a steering column (67) is attached to the steering column mounting bracket (81).

## Patentansprüche

1. Crashtest-Vorrichtung (11) mit einem Befestigungsrahmen (13), der eine Kabine (C, C-1) aufweist, die auf einem realen Fahrzeugrahmen montiert ist; mit einem Förderwagen (15), der den Befestigungsrahmen (13) trägt; einer vorstehenden Barriere (17), die vor der Kabine (C, C-1) angeordnet ist; einer beweglichen Vorrichtung (19), die den Förderwagen (15) gegen die vorstehende Barriere (17) bewegt; einer vorderen Tragvorrichtung (27, 27-1), die auf dem Befestigungsrahmen (13) angeordnet ist und einen vorderen Teil der Kabine (C, C-1) trägt; und mit einer hinteren Tragvorrichtung (35, 35-1), die auf dem Befestigungsrahmen (13) angeordnet ist und einen hinteren Teil der Kabine (C, C-1) festhält, den sie trägt, **dadurch gekennzeichnet, daß** die vordere Tragvorrichtung (27, 27-1) in der Lage ist, dem vorderen Teil zu ermöglichen, daß er sich in Richtung nach vorn und nach hinten zu bewegt; und mit einem Rahmenverformungsgrad-Reproduktionsmechanismus (21), der eine Verformung des realen Fahrzeugrahmens reproduziert, wenn die Kabine (C, C-1) mit der vorstehenden Barriere (17) durch eine Bewegung des Förderwagens (15) kollidiert.

2. Crashtest-Vorrichtung (11) nach Anspruch 1, **dadurch gekennzeichnet, daß** eine lasttragende Plattform-Spannvorrichtung (23) hinter der Kabine (C, C-1) auf dem Befestigungsrahmen (13) angebracht ist.

3. Crashtest-Vorrichtung (11) nach Anspruch 1, **dadurch gekennzeichnet, daß** der vordere Teil der Kabine (C, C-1), der durch die Tragvorrichtung (27, 27-1) getragen wird, ein vorderer Kabinenhalterungsteil (25) ist, der auf einem vorderen, unteren Teil der Kabine (C, C-1) liegt; daß eine Getriebebox-Spannvorrichtung (61), die einer Steuergetriebebox gleichen soll, an dem vorderen Kabinenhalterungsteil (25) angebracht ist; und daß an der Getriebebox-Spannvorrichtung (61) eine Steuersäule (67) angebracht ist.

4. Crashtest-Vorrichtung (11) nach Anspruch 1, **dadurch gekennzeichnet, daß** der vordere Teil der Kabine (C, C-1), der von der vorderen Tragvorrichtung (27, 27-1) getragen wird, ein vorderer Kabinenbefestigungsteil (25) ist, der auf einem vorderen, unteren Teil der Kabine (C, C-1) liegt; daß ein Steuersäulen-Befestigungsarm (81) an dem vorderen Kabinenbefestigungsteil (25) angebracht ist, und daß die Steuersäule (67) an dem Steuersäulen-Befestigungsteil (81) angebracht ist.

## Revendications

1. Appareil (11) pour essai de collision, comprenant :
un châssis de montage (13) qui porte une cabine (C, C-1) montée sur un châssis de véhicule réel,
un chariot (15) sur lequel est monté le châssis de montage (13) ;
une barrière en projection (17) disposée en avant de la cabine (C, C-1) ;
un dispositif mobile (19) qui déplace le chariot (15) vers la barrière en projection (17) ;
un dispositif de support avant (27, 27-1) étant disposé sur le châssis de montage (13) et supportant une partie avant de la cabine (C, C-1) ; et
un dispositif de support arrière (35, 35-1) étant disposée sur le châssis de montage (13) et assurant une fixation pour supporter une partie arrière de la cabine (C, C-1) ;
**caractérisé en ce que**
le dispositif de support avant (27, 27-1) est adapté à permettre à la partie avant de se déplacer dans une direction vers l'avant et vers l'arrière ; et
un mécanisme de reproduction d'amplitude de déformation de châssis (21) qui reproduit une déformation du châssis de véhicule réel quand la cabine (C, C-1) entre en collision contre la barrière en projection (17) par un mouvement du chariot (15).

2. Appareil pour essai de collision (11) selon la revendication 1, dans lequel une plate-forme porte-charge (23) est montée derrière la cabine (C, C-1) sur le châssis de montage (13).

3. Appareil pour essai de collision (11) selon la revendication 1, dans lequel la partie avant de la cabine (C, C-1) qui est supportée par le dispositif de support avant (27, 27-1) est une partie de montage de cabine avant (25) disposée sur une partie inférieure avant de la cabine (C, C-1) ;
une monture formant boîtier à engrenages (61) qui imite un boîtier de direction à engrenages est attachée sur la partie de montage de cabine avant (25) ; et
une colonne de direction (67) est attachée sur la monture formant boîtier à engrenages (61).

4. Appareil pour essai de collision (11) selon la revendication 1, dans lequel la partie avant de la cabine (C, C-1) qui est supportée par le dispositif de support avant (27), 27-1) est une partie de montage de cabine avant (25) disposée sur une partie inférieure avant de la cabine (C, C-1) ;
une platine de montage pour colonne de direction (81) est attachée sur la partie de montage de cabine avant (25) ; et
une colonne de direction (67) est attachée sur la platine de montage pour colonne de direction (81).
